# EUROPEAN PATENT APPLICATION

(11) **EP 4 345 702 A1**
(43) Date of publication of application: **03.04.2024**
(21) Application number: 22198426.3
(22) Date of filing: 28.09.2022
(51) Int. Cl.: G06Q 10/00, G06Q 50/04, G05B 17/02, G05B 19/418

(54) **METHOD FOR GENERATING A MODEL, COMPUTER PRODUCT, SYSTEM**

(71) Applicant: Siemens Industry Software NV, 3001 Leuven (BE)
(72) Inventor: Dürr, Matthias, 90473 Nürnberg (DE)
(74) Representative: Siemens Patent Attorneys

(57) **Abstract**

The invention relates to a method for generating a model of a system (TFC), with the steps:
(a) providing an engineering system (EGT) with library elements (LET), where the library elements (LET) are defined by interaction (IAC) and a function model (FCM),
wherein said interaction (IAC) is defined by ports (PRT), incoming port entity (PET) types, outgoing port entity (PET) types,
wherein said function model (FCM) generates outgoing port entities (PET) from incoming port entities (PET),

(b) providing a design (DSG) of the system (TFC) comprising defined system components (DSC) of a specified plant area (SPA);
(c) selecting library elements (LET) for the defined system components (DSC);
(d) linking interactions (IAC) of different selected library elements (LET) according to the design (DSG).

To better enable undetailed drafting and explorative working the invention proposes that the system (TFC) comprises at least one undefined plant area (UDA) whose interaction (IAC) with the specified plant area (SPA) is specified,
the method further comprising:
(e) linking the interaction (IAC) of the selected library elements (LET) to the interaction (IAC) of the undefined plant area (UDA) by providing a non-specific library element (ULE),
(f) generating a function model (FCM) for the non-specific library element (ULE) for determining outgoing port entities (PET) from incoming port entities (PET) using the Buckingham Pi theorem.

## Description

### FIELD OF THE INVENTION

The invention relates to a method for generating a model of a system, with the steps:
(a) providing an engineering system with library elements,
   where the library elements are defined by interaction and a function model,
   wherein said interaction is defined by ports, incoming port entity types, outgoing port entity types,
   wherein said function model generates outgoing port entities from incoming port entities,
(b) providing a design of the system comprising defined system components of a specified plant area;
(c) selecting library elements for the defined system components;
(d) linking interactions of different selected library elements according to the design.
Further the invention relates to a system.

### BACKGROUND OF THE INVENTION

In the field of plant engineering and mechanical engineering systems for engineering, i.e. planning and realization of automation, of an industrial plant are commonly used. Automated processes in industrial plants like plants in general or machines, production lines, chemical plants or power plants are complex. Often the system to be controlled is complex and the engineering process is multidisciplinary. The plant may comprise a plurality of modules comprising several assemblies and subassemblies. Several of these assemblies and modules are multidisciplinary and interdependent. In an unfavorable case automation and control engineers may start working on the project not before providing a first complete plant draft. Such interdependency delay increases planning time and costs. In today's agile industrial environment such delay can hardly be accepted.

From WO 2014146716 A1 a method for engineering an industrial plant is known including weakly defined basic engineering objects that can be detailed at a later project stage. Similarly, from WO 2015172814 A1 a method for generating library elements for an engineering system is known comprising an automatic generation of library elements from e.g., project history.

Engineering systems often provide a library with library elements. Such libraries may contain standard assemblies and subassemblies as library elements, e.g., oil system comprising an oil tank, an oil pump, oil, piping and valves, a cooler, sensors for pressure and temperature and maybe further elements. These library elements may be specified and parametrized during the planning of the plant.

Function blocks are commonly used library elements in graphical engineering tools. They provide an easy means to describe a function required by a process and its connections to other functions. The functions can also be equivalent to specific pieces of equipment like pumps, valves, transducers, PID-controllers, or the like. Some products utilizing function blocks are, e.g., Siemens' Simcenter Amesim (simulation), Siemens' Comos (process plant engineering) and Siemens' CFC (automation engineering within PCS7 and TIA Portal, see figures below as an example).

These tools require an engineer with considerable oversight of the engineering system's library content to enable efficiency. Beginners or occasional users need a significant induction time and a deep existing knowledge of the function to implement these correctly. A development engineer working repetitively in an established technical field may be able to efficiently apply parts of such libraries.

Engineering systems such as Simcenter Amesim (simulation) invite to a more explorative working style. The simulation of an imperfect draft engineering design may lead to iteratively improved increasingly optimal solutions. The user in this case could be rather a research engineer, addressing a new solution approach in a rapidly developing field, e.g., the application of a memristor, a metamaterial with a negative Poisson ratio or a hydraulic device employing a ferrofluid. In such innovative application of the system, it may not be evident, which function block may be the best or even an appropriate choice. Further parametrizing a selected library element, e.g., a function block becomes difficult, as the function may be not fully known.

### SUMMARY OF THE INVENTION

Based on the shortcomings of the state of the art it is one object of the invention to enable drafting of a plant or a system with approximate data, educated guesses and undetailed areas of only approximate function.

In accordance with the invention there is provided a solution for the above-described problems by the incipiently defined method wherein in addition to defined system components, the system comprises at least one undefined plant area whose interaction with the specified plant area is specified, the method further comprising:
(e) linking the interaction of the selected library elements to the interaction of the undefined plant area by providing a non-specific library element,
(f) generating a function model for the non-specific library element for determining outgoing port entities from incoming port entities using the Buckingham Pi theorem.

The step (f) is preferably a computer-implemented step. This enables a fully automized generation of a function model for the non-specific library element. According to a preferred embodiment the step (e) may preferably be a computer-implemented step. Most preferably steps (e), (f) are both computer-implemented. According to a preferred embodiment also steps (c) and/or (d) are computer-implemented steps. Most preferably the design is provided in a standardized format to enable a fully automatic processing.

The object of the invention is achieved by the independent claims. The dependent claims describe advantageous developments and modifications of the invention.

The invention is led by the understanding that often interactions of an undefined system are known, which are - in the terminology of the invention the ports, incoming port entity types, outgoing port entity types - which basically reflect the natural-scientific function of the system and the number of the parameters or ports of a library element or a function block. By understanding the interaction but not knowing the exact function in the unspecified area of a system the user basically formulates a requirement specification without knowing the detailed specification. This situation reflects the reality of ordering components or services of engineering from a third party. The invention embodies and reflects this situation by providing the non-specific library element of the engineering system. Moreover, the invention provides a function model, which may be understood as a provisional function model of the non-specific library element embodying the undefined plant area on the basis of the interaction with the specified plant area.

In an agile development environment of several teams providing components of a system or plant such undefined plant areas may be specified stepwise and replaced step by step with more detailed library elements comprising interactions and function models. Such the undefined area may be stepwise reduced. In the meantime, all teams working on other components of the system are enabled to continue since the interaction with unspecified areas remains available all the time.

Consequently, the invention enables to design a system with a flexible or agile approach such that the system design process may start with a group of at least one or several undefined plant areas. The project coordinator may split the system into assemblies and subassemblies and specify the interactions in-between. Every team working on one of these assemblies or subassemblies may work nearly independent of the other teams since provisionally the interactions are available as if the components would be specified already. During the projects progress the interactions will change due to replacement of more and more non-specific library elements comprising function model on the basis of the Buckingham Pi theorem by library elements with function models reflecting design details and with higher accuracy.

According to a preferred embodiment the system comprises a system control for controlling the system. This system control may be tested by simulation using the model as the system to be controlled, the model being generated via the engineering system applying the method according to the invention.

Further, according to a preferred embodiment of the invention the system control may be a model-based control applying the model being generated according to the invention. The model of the model-based control may comprise at least one non-specific library element, with function models for the non-specific library element for determining out-going port entities from incoming port entities using the Buckingham Pi theorem. Applying the non-specific library element in the control algorithm of the model-based control may enable faster control reactions due to the nature of the Buckingham Pi theorem-based function model which often is a simplified version compared to a more detailed model.

Further the method according to the invention enables to generate reduced order models for control simulation or for model-based controlling with less effort. Since the scheme according to the invention enables a computer implemented automized generation of function models for undefined plant areas with known interactions the control method and a control module may be provided as a self-adaptive control module with a model-based control algorithm.

The invention therefore further relates to a model-based control method and a control module arranged and configured to execute said model-based control method for respectively controlling a system, wherein the model of the model-based control is generated by a method according to the invention respectively according to claim 1.

The problem underlying the invention is solved by a function block that generates an approximation of an analytical solution to an engineering function based on a method from the field of dimensional analysis, known as "Buckingham π theorem".

(Dimensional Analysis is, e.g., used in the field of fluid dynamics (Reynolds number, Froude number, Mach number, etc.) and materials science, where complex relations that are hard to quantify and measure nevertheless need to be made available to engineering. The Buckingham π theorem is also used to validate hypotheses that have been developed by other means.

The Buckingham π theorem is well established in engineering and science and the default way of application is well known to a person with ordinary skill in the art. Therefore only a few aspects are considered herein. The Buckingham π theorem states that just by knowing the parameters or variables with independent physical units involved in a problem a descriptive equation can be defined as an approximation that relies on few dimensionless parameters only, rather than a fully analytical physical description.

The benefit is that few experimental data or an educated guess for these parameters can suffice to come to a numerical description of a function that is not yet fully understood in all physical details but generates solutions which are at least conclusive, and which often correctly reflect the physical behavior with regard to proportionalities, trends, and tendencies, and which even may sufficiently accurate. The Buckingham π theorem basically neither qualifies fully as a numerical nor as a physical model. Instead, the Buckingham π theorem, when applied as herein proposed becomes synergistically suitable to produce to generate a function model or a transfer function of a system, assembly, or subassembly due to its capability to automize and due to its characteristic simplification of the function.

In contrast to an analytical solution for the function block engineering, where the function or the type of function block including their parameters and boundary conditions need to be known in detail in advance, the non-specific library element or such a Buckingham π theorem-function block requires only the interaction, namely a set of ports assigned with independent measurement units. For example, the user or engineer needs to know the type and respective number of independent measurement units used at the function block's ports and assigns them to a non-specific library element. The method according to the invention - in other words - provides for the non-specific library element evaluating the number and types of the ports and their respective physical units, checking for consistency, and setting up a set of equations and matrices and solving these to determine the function model.

A preferred embodiment provides that additional information e.g., some data from experience or preliminary experiments, they also are assigned to the Buckingham π theorem-function block (practically, this information would be submitted after defining the ports or posed as a question to the engineer, once the determination of the equation has been performed).

The determination of the dimensionless factors can be performed for the function modules of the non-specific library element in different additional ways, which may be applied alternatively or in combination. These options may be used to be compared or compete to each other regarding accuracy and/or latency or other performance indicators of importance for the respective specific application. The options may comprise one or several of the items listed here:
a) solving the equation using experimental data
b) searching for similar equations,
c) presenting analogies and library elements, e.g. function blocks with similar behavior from library, this step may employ AI
d) exploring and optimizing the solution by varying the constants which may be termed "constant exploration":
e) interactive involvement of the user. This may involve an Educated guess: the equation is presented to the engineer who can fill in the factors according to his judgement, available data, etc..

The invention makes it possible to work with objects, whose physical behaviors are at least partly known or postulated, but not yet fully understood.

The invention further relates to a computer product arranged and configured to execute the steps of the method as explained herein and as defined by the claims.

The invention further relates to a computer-readable medium encoded with executable instructions, that when executed, cause the computer product according to carry out a method according to the invention.

The invention further relates to a system for generating a model of a system, the system comprising at least one processor being prepared by upload of computer-executable code to perform a method according to the invention.

### BRIEF DESCRIPTION OF THE DRAWINGS

Embodiments of the invention are now described, by way of example only, with reference to the accompanying drawings, of which:
- Figure 1: shows a simplified flow diagram illustrating the method according to the invention as well as a system for performing the method;
- Figure 2: shows schematically the stepwise application of the Buckingham Pi theorem;
- Figure 3: shows possibilities to determine dimensionless parameters while applying the Buckingham Pi theorem;
- Figure 4: shows a stepwise reduction of an undefined plant area.

It is noted that in different figures, similar or identical elements may be provided with the same reference signs.

### DESCRIPTION OF THE DRAWINGS

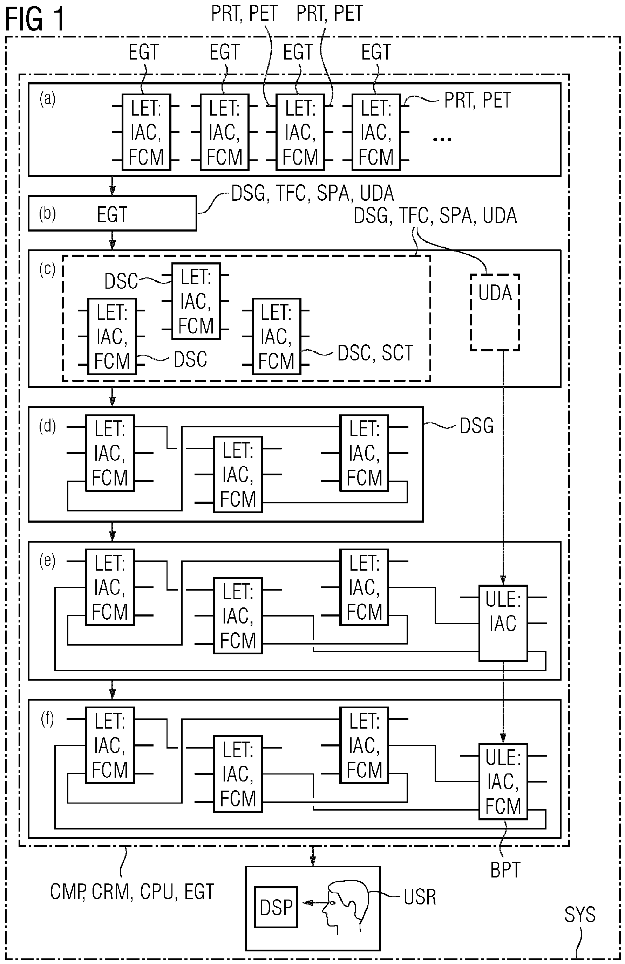

Figure 1 shows a simplified flow diagram illustrating a method of

Figure 1 shows a simplified flow diagram illustrating a method for generating a model of a system TFC according to the invention.

Further, figure 1 illustrates a system SYS for generating a model of a system TFC, the system SYS comprising at least one processor CPU being prepared by upload of computer-executable code to perform the method according to the invention. The method may be handled as a computer product CMP arranged and configured to execute the steps of the method according to the invention. Such computer product CMP may be a data storing media, like an optical or magnetic data storage or a download enablement e.g., a reading access of an URL where the respective data is provided to a user USR. Such data storage may be a computer-readable medium CRM encoded with executable instructions, that when executed, cause the computer product to carry out a method according to the invention.

As illustrated in Figure 1, during a first step an engineering system EGT with library elements LET is provided, wherein the library elements LET are defined by interaction IAC and a function model FCM. Said interaction IAC is defined by ports PRT, incoming port entity PET types, outgoing port entity PET types of the library elements LET. Said function model FCM generates outgoing port entities PET from incoming port entities PET.

During step (b) a design DSG of the system TFC is provided. This can be a design of any type of said technical system TFC. The design comprises defined system components DSC of a specified plant area SPA. Herein, plant area SPA means a part of the system TFC. In addition to defined system components DSC, the system TFC comprises an undefined plant area UDA.

In step (c) library elements LET are selected for the defined system components DSC. This can be done automatically respectively fully computer-implemented or manually by a user. During step (d) interactions IAC of different selected library elements LET are connected or linked to each other according to the design DSG.

Most preferably the design is provided in a standard format enabling fully automized assignment of library elements LET. The automized assignment and linking of library elements LET may be done via an AI-module linked to a design-library database recognizing design patterns and retrieving corresponding library elements LET from an engineering system EGT library respectively database.

An interaction IAC of said undefined plant area UDA with components of the specified plant area SPA is defined in a specification of the interaction IAC. Based on this specification of the interaction IAC the method comprises step (e), wherein linking the interaction IAC of the selected library elements LET to the interaction IAC of the undefined plant area UDA by providing a non-specific library element ULE is done.

For the non-specific library element ULE in step (f) a function model FCM for determining outgoing port entities PET from incoming port entities PET using the Buckingham Pi theorem is generated. For the purpose of better imagination in the figures the library elements LET may be interpreted as having incoming port entities PET on the left-hand side and outgoing port entities PET on the right-hand side. But this is not necessarily the case.

A user USR can view the resulting function model FCM and the arrangement of respective function blocks corresponding to the library elements LET of the complete system TFC on a display DSP.

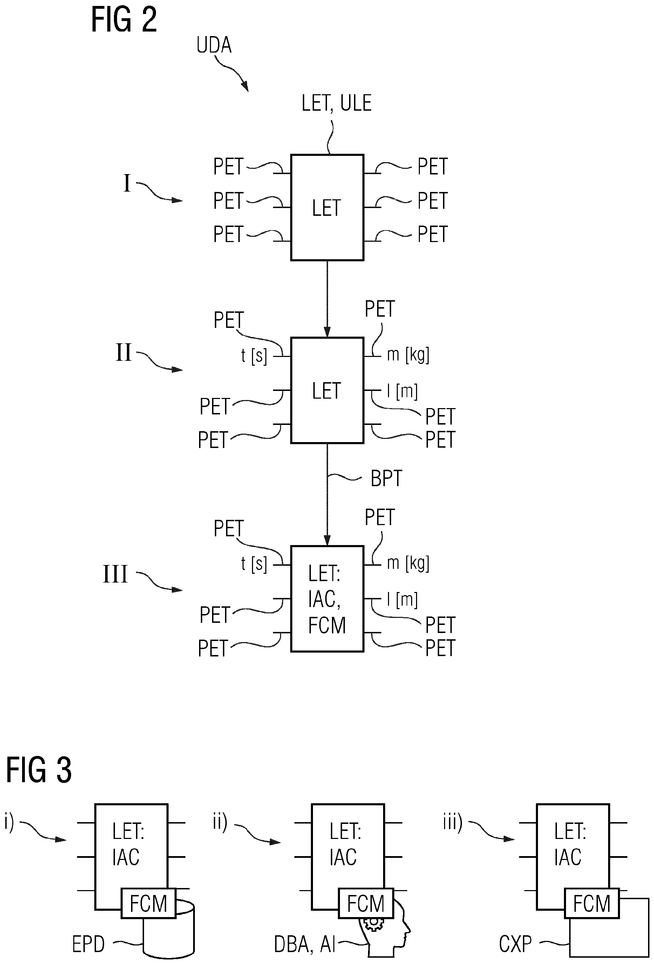

Figure 2 schematically shows the stepwise application of the Buckingham Pi theorem BPT. As a first step I) a non-specific library element ULE for an undefined plant area UDA of the system TFC is provided.

Step II) illustrates that the interaction IAC with components of the specified plant area SPA is specified.

During step III) the Buckingham Pi theorem BPT is applied to generate the function model FCM of the non-specific library element ULE for an undefined plant area UDA.

Figure 3 shows possibilities to determine dimensionless parameters while applying the Buckingham Pi theorem BPT.
i) determining the parameters of the equation generated via the Buckingham Pi theorem BPT using experimental data EPD
ii) searching for similar equations, present analogies and library elements with similar behavior from a database DBA or library, may employ AI
iii) "Constant exploration" CXP: explore and optimize the solution by varying the constants or guessing preferably making an "Educated guess": the equation is presented to the engineer who can fill in the factors according to his judgement, available data, etc..

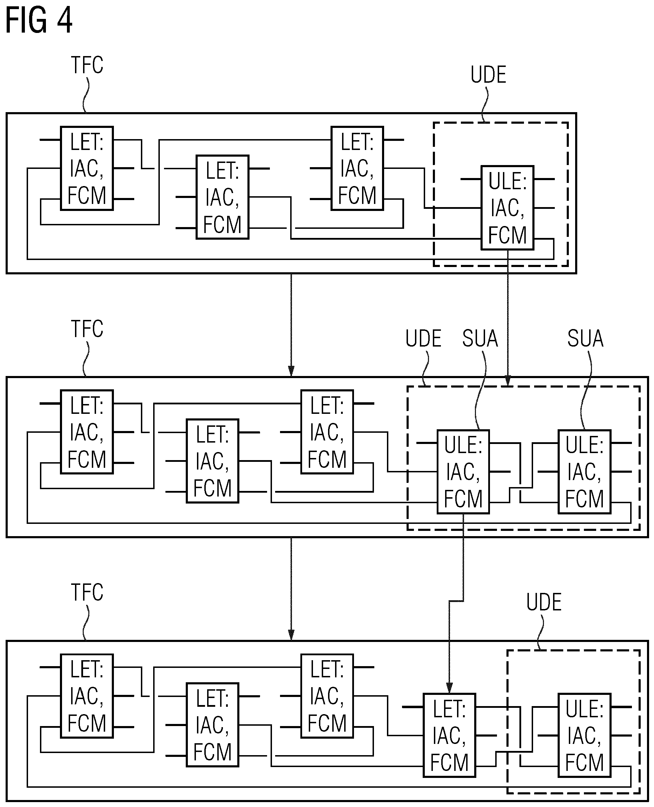

Figure 4 illustrates that an undefined plant area UDE may be specified stepwise and replaced step by step with more detailed library elements LET comprising interactions IAC and function models FCM. Such the undefined area UDE may be stepwise reduced. The undefined plant area UDE as shown in the top of figure 3 may be split into at least two undefined plant subareas SUA corresponding to possible assemblies and subassemblies and specify the interactions IAC in-between as shown in the middle system TFC. During the project's progress one or several of the undefined plant areas UDE become specified plant area SPA and the non-specific library element ULE become library element LET - as shown in the bottom system TFC. The corresponding interactions IAC change due to replacement of more and more non-specific library elements ULE comprising function model FCM on the basis of the Buckingham Pi theorem BPT by library elements LET with function models FCM reflecting design details and with higher accuracy.

### Reference list

- DSC: defined system components
- PET: port entities
- LET: library element
- EGT: engineering system
- TFC: system
- UDA: undefined plant area
- DSG: design
- PRT: ports
- ULE: non-specific library element
- FCM: function model
- IAC: interaction
- SPA: specified plant area
- ULE: non-specific library element
- SCT: system control
- BPT: Buckingham Pi theorem
- SUA: undefined plant subareas

## Claims

1. Method for generating a model of a system (TFC), with the steps:
(a) providing an engineering system (EGT) with library elements (LET), wherein said library elements (LET) are defined by interaction (IAC) and a function model (FCM),
wherein said interaction (IAC) is defined by ports (PRT), incoming port entity (PET) types, out-going port entity (PET) types of the library elements (LET),
wherein said function model (FCM) generates outgoing port entities (PET) from incoming port entities (PET),
(b) providing a design (DSG) of the system (TFC) comprising defined system components (DSC) of a specified plant area (SPA),
(c) selecting library elements (LET) for the defined system components (DSC),
(d) linking interactions (IAC) of different selected library elements (LET) according to the design (DSG),
**characterized in that**
in addition to defined system components (DSC), the system (TFC) comprises at least one undefined plant area (UDA) whose interaction (IAC) with components of the specified plant area (SPA) is specified,
the method further comprising:
(e) linking the interaction (IAC) of the selected library elements (LET) to the interaction (IAC) of the undefined plant area (UDA) by providing a non-specific library element (ULE),
(f) generating a function model (FCM) for the non-specific library element (ULE) for determining outgoing port entities (PET) from incoming port entities (PET) using the Buckingham Pi theorem.

2. Method according to claim 1, wherein the system (TFC) comprises a system control (SCT) for controlling the system (TFC).

3. Method according to claim 1, further comprising
- Splitting said undefined plant area (UDA) into at least two undefined plant subareas (SUA) by providing a non-specific library element (ULE) for each of the subareas (SUA).

4. Computer product (CMP) arranged and configured to execute the steps of the method according to any one of the preceding claims 1 to 3.

5. A computer-readable medium (CRM) encoded with executable instructions, that when executed, cause the computer product (CMP) according to claim 4 to carry out a method according to any one of claims 1 to 3.

6. System (SYS) for generating a model of a system (TFC), the system (SYS) comprising at least one processor (CPU) being prepared by upload of computer-executable code to perform a method according to at least one of the preceding claims 1 - 3.
